# EUROPEAN PATENT APPLICATION

(11) **EP 4 759 629 A1**
(43) Date of publication of application: **17.06.2026**
(21) Application number: 24878528.9
(22) Date of filing: 20.06.2024
(51) Int. Cl.: B60N 2/28

(54) **STRUCTURE FOR STEPLESS ADJUSTMENT OF ANGLE OF SEAT BODY AND CHILD SAFETY SEAT**

(30) Priority: 18.10.2023 CN 202322794368 U
(71) Applicant: Ningbo Baby First Baby Products Co., Ltd., Ningbo, Zhejiang 315400 (CN)
(72) Inventor: GUO, Yi, Ningbo, Zhejiang 315400 (CN)
(74) Representative: Santarelli
(86) International application number: PCT/CN2024/100324
(87) International publication number: WO 2025/081875

(57) **Abstract**

A structure for stepless adjustment of the angle of a seat body and a child safety seat. The structure comprises a seat body (1) and a base assembly (2); the seat body (1) is provided with a first connecting rod (11); the base assembly (2) comprises a support frame (21), the support frame (21) being provided with a first arc-shaped guide rail (211) to which the first connecting rod (11) is slidably connected; the first connecting rod (11) is connected to a worm gear (3); a worm (4) meshed with the worm gear (3) is movably connected to the base assembly (2); the worm gear (3) is connected to the seat body (1) by means of the first connecting rod (11); the worm (4) is movably mounted on the base assembly (2). By means of the transmission connection between the worm gear (3) and the worm (4), the tilt angle of a seat body of a child safety seat is smoothly adjusted, such that manufacturing costs can be reduced and production efficiency can be improved. Moreover, the requirements of different children are satisfied, such that the seat is suitable for various usage scenarios. In addition, by means of the self-locking function between the worm gear (3) and the worm (4), the tilt angle of the seat body (1) can be set at any position within the range of motion, thereby achieving the purpose of stepless adjustment of the tilt angle of the seat body (1).

## Description

### Technical Field

This disclosure relates to the field of automotive safety products, and in particular, to a stepless angle-adjustment structure for a seat body and a child safety seat.

### Background of the Invention

In order for the seat to be suitable for various usage scenarios and to meet the differing needs of children, child safety seats capable of adjusting the tilt angle of the seat body have appeared on the market. However, the angle-adjustment structures of such child safety seats are currently relatively complex, resulting in low production efficiency and high manufacturing costs.

### Summary of the Invention

To address at least one of the aforementioned problems, the present disclosure first provides a stepless angle-adjustment structure for a seat body, including a seat body and a base assembly. The seat body is provided with a first connecting rod, and the base assembly includes a support frame. The support frame is provided with a first arc-shaped guide rail slidably connected to the first connecting rod. The first connecting rod is connected to a worm gear, and the base assembly is movably connected to a worm that meshes with the worm gear.

Optionally, the worm gear is connected to a middle portion of the first connecting rod.

Optionally, the base assembly includes a base and a rotary disc that are rotatably connected to each other, the support frame is fixedly disposed on the rotary disc, and the worm is movably connected to the rotary disc.

Optionally, the rotary disc is provided with support holes for rotatably mounting the worm.

Optionally, the seat body is further provided with a second connecting rod that is spaced apart from the first connecting rod along a front-rear direction, and the support frame is provided with a second arc-shaped guide rail slidably connected to the second connecting rod.

Optionally, the first connecting rod is located in front of the second connecting rod.

Optionally, the worm gear is provided with helical teeth, the helical teeth being concentrically arranged with the first arc-shaped guide rail.

Optionally, the worm gear is provided with a recessed part, and a bottom portion of the seat body is formed with a protruding part matching the recessed part.

Optionally, the recessed part is provided with a boss, and the protruding part is provided with a mounting hole matching the boss.

Compared to existing technologies, the stepless angle-adjustment structure for a seat body in this disclosure employs a worm gear connected to the seat body via a first connecting rod, with a worm movably mounted on the base assembly. Through the transmission connection between the worm gear and the worm, a smooth adjustment of the tilt angle of the child safety seat is ensured, reducing manufacturing costs and improving production efficiency. This also meets the needs of different children, making the seat suitable for various usage scenarios. Furthermore, by utilizing the self-locking function between the worm gear and the worm, the tilt angle of the seat body can be set at any position within its travel range, thus achieving the purpose of stepless adjustment of the tilt angle of the seat body.

In addition, the present disclosure provides a child safety seat, including the aforementioned stepless angle-adjustment structure for a seat body.

Compared to existing technologies, the child safety seat in the present disclosure has the same advantageous effects as those of the aforementioned stepless angle-adjustment structure for a seat body, which will not be repeated herein.

### Brief Description of the Drawings

FIG. 1 is an exploded view of a stepless angle-adjustment structure for a seat body according to an embodiment of the present disclosure;
FIG. 2 is a structural view of the worm gear according to an embodiment of the present invention;
FIG. 3 is a partial cross-sectional view of the assembly of the seat body and the worm gear according to an embodiment of the present invention;
FIG. 4 is a structural view of the assembly of the seat body and the worm gear according to an embodiment of the present disclosure;
FIG. 5 is a structural view of the assembly of the base assembly and the worm according to an embodiment of the present disclosure;
FIG. 6 is a partial cross-sectional view of the stepless angle-adjustment structure for a seat body according to an embodiment of the present disclosure, when the reclining angle is at a maximum;
FIG. 7 is a partial cross-sectional view of the stepless angle-adjustment structure for a seat body according to an embodiment of the present disclosure, when the reclining angle is at a minimum.

### Reference signs are as follows:

1, seat body; 11, first connecting rod; 12, second connecting rod; 13, protruding part; 14, mounting hole; 2, base assembly; 21, support frame; 211, first arc-shaped guide rail; 212, second arc-shaped guide rail; 22, base; 23, rotary disc; 231, support hole; 3, worm gear; 31, helical teeth; 32, recessed part; 33, boss; and 4, worm.

### Detailed Description of Embodiments

To make the above-mentioned objectives, features and advantages of the present disclosure more apparent and understandable, the specific embodiments of the present disclosure will be described in detail below with reference to the accompanying drawings.

In the description of the present disclosure, it should be understood that the terms "upper" and "lower", indicating the orientation or positional relationship, are based on the orientation or positional relationship when the product is in normal use.

The terms "first" and "second" are used for descriptive purposes only and should not be construed as indicating or implying relative importance or implicitly specifying the number of technical features indicated. Thus, a feature defined as "first" or "second" may explicitly or implicitly include at least one of that feature.

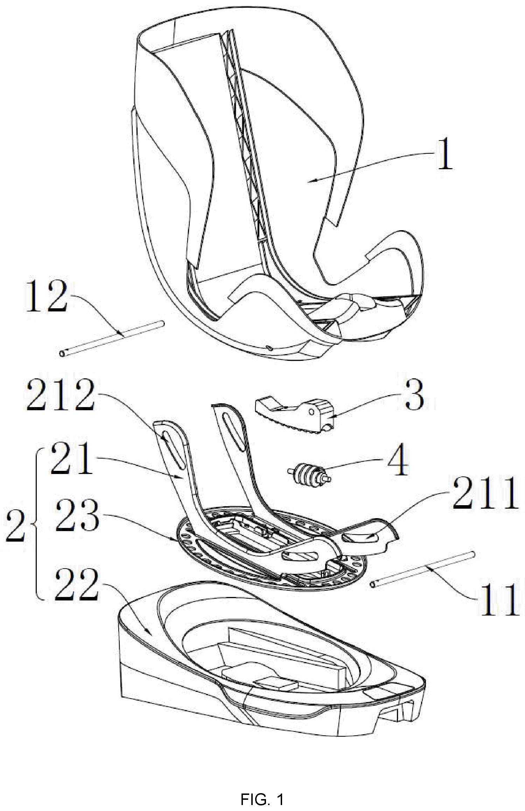

An embodiment of the present disclosure provides a stepless angle-adjustment structure for a seat body, as shown in FIGS. 1 to 7, including a seat body 1 and a base assembly 2. The seat body 1 is provided with a first connecting rod 11, and the base assembly 2 includes a support frame 21. The support frame 21 is provided with a first arc-shaped guide rail 211 that is slidably connected to the first connecting rod 11. The first connecting rod 11 is connected to a worm gear 3, and the base assembly 2 is movably connected to a worm 4 that meshes with the worm gear 3.

The worm gear 3 may be located at one end of the first connecting rod 11 or in a middle portion thereof. The first arc-shaped guide rail 211 has a certain length in the front-rear direction so that the first connecting rod 11 is able to slide back and forth within the first arc-shaped guide rail 211 so as to adjust the tilt angle of the seat body 1. Here, the front-rear direction refers to the direction consistent with the orientation of the seat body 1. The worm gear 3 has a horseshoe shape and is provided with a section of helical teeth 31. The helical teeth 31 mesh with the teeth of the worm 4 to achieve transmission. The worm 4 is driven to rotate by an external force, namely, the worm 4 may be driven to rotate by a motor or manually. During rotation of the worm 4, the worm gear 3 is driven to rotate back and forth in the front-rear direction, thereby driving the seat body 1 to rotate back and forth, so as to adjust the tilt angle of the seat body 1. When the external force is removed, the worm gear 3 and the worm 4 achieve self-locking, thereby locking the tilt angle of the seat body 1 and allowing it to remain at any position, realizing the stepless angle adjustment of the seat body 1.

In this embodiment, the stepless angle-adjustment structure for the seat body is provided with a worm gear 3 connected to the seat body 1 via the first connecting rod 11 and the worm 4 movably mounted on the base assembly 2. Through the transmission connection between the worm gear 3 and the worm 4, the tilt angle of the child safety seat body 1 can be smoothly adjusted, which can reduce manufacturing costs and improve production efficiency. At the same time, it can meet the needs of different children and make the seat suitable for various usage scenarios. In addition, by utilizing the self-locking between the worm gear 3 and the worm 4, the tilt angle of the seat body 1 can be set at any position within its travel range, thereby achieving the purpose of stepless adjustment of the tilt angle of the seat body 1.

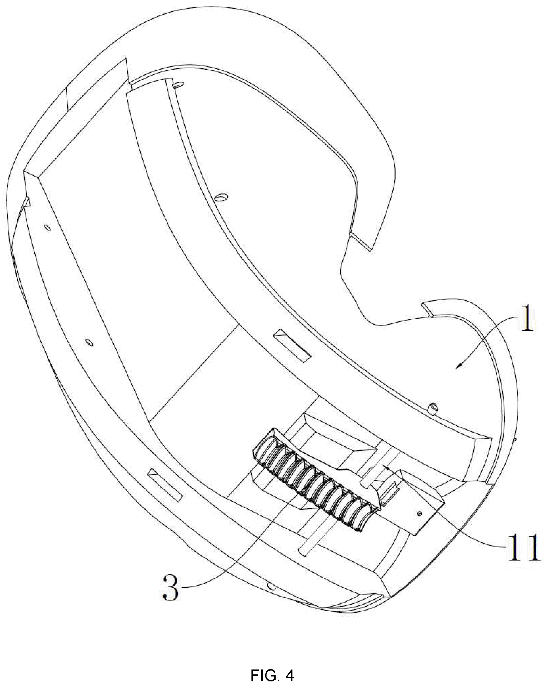

Optionally, as shown in FIG. 4, the worm gear 3 is connected to a middle portion of the first connecting rod 11, which can ensure the balance and stability when adjusting the tilt angle of the seat body, thereby ensuring that the seat body 1 can remain balanced during the adjustment process.

Optionally, as shown in FIGS. 1, 5, 6, and 7, the base assembly 2 includes a base 22 and a rotary disc 23 rotatably connected to each other, the support frame 21 is fixedly disposed on the rotary disc 23, and the worm 4 is movably connected to the rotary disc 23.

The base 22 is fixedly connected to the car seat, and the rotary disc 23 is rotatably disposed on the base 22, so that the orientation of the seat body 1 can be changed by rotating the rotary disc 23. The support frame 21 can be rotated synchronously with the rotary disc 23. The worm 4 is disposed on the rotary disc 23, ensuring that the worm 4 remains engaged with the worm gear 3. That is, rotation of the rotary disc 23 to any angle does not affect the adjustment of the tilt angle of the seat body 1, so that the seat can be adapted to more usage scenarios.

Optionally, as shown in FIGS. 1, 6, and 7, the seat body 1 is further provided with a second connecting rod 12 spaced apart from the first connecting rod 11 along the front-rear direction, and the support frame 21 is provided with a second arc-shaped guide rail 212 slidably connected to the second connecting rod 12. The first connecting rod 11 and the second connecting rod 12 are provided so as to increase the stability and support capacity of the seat body 1. The shape of the second arc-shaped guide rail 212 is consistent with the shape of the first arc-shaped guide rail 211 to ensure the stability of the movement of the seat body 1.

Optionally, as shown in FIGS. 1, 6, and 7, the first connecting rod 11 is located in front of the second connecting rod 12. When a child is seated, the center of gravity of the seat body 1 is close to the first connecting rod 11 located in front. The worm gear 3 connected to the first connecting rod 11 drives the tilt angle of the seat body 1 to change under its engagement with the worm 4. This allows the seat body 1 to be moved under a smaller force or torque, which facilitates an easier and more stable angle adjustment of the seat.

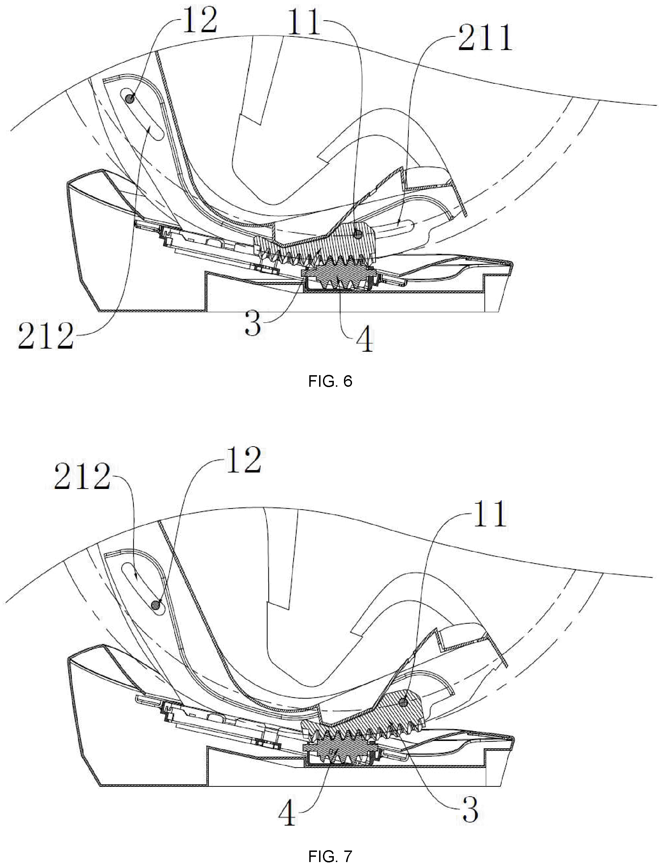

Optionally, as shown in FIGS. 6 and 7, the worm gear 3 is provided with helical teeth 31, which is concentrically arranged with the first arc-shaped guide rail 211. The helical teeth 31 mesh with the worm 4, so that when the worm 4 is rotated, the worm gear 3 is driven to rotate around the axis of the worm gear 3. In addition, the curvature of the helical teeth 31 matches the curvature of the first arc-shaped guide rail 211, thereby facilitating a smoother and more precise angle adjustment of the seat body 1. By concentrically arranging the helical teeth 31 with the first arc-shaped guide rail 211, the movement of the worm gear 3 can be effectively controlled, improving the adjustment performance of the seat body 1 tilt angle, thereby allowing an easier operation and control, while ensuring that an accurate and stable adjustment.

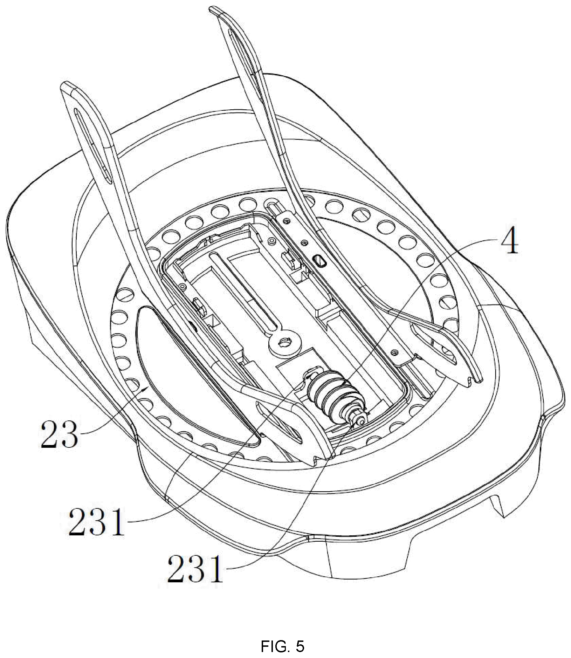

Optionally, as shown in FIG. 5, the rotary disc 23 is provided with support holes 231 for the worm 4 to be rotatably mounted. The number of support holes 231 is two, for mounting and supporting two ends of the worm 4 respectively, so that the worm 4 can rotate stably on the rotary disc 23, thereby controlling the tilt angle of the seat body 1, ensuring the stability and reliability of the stepless angle-adjustment structure for the seat body.

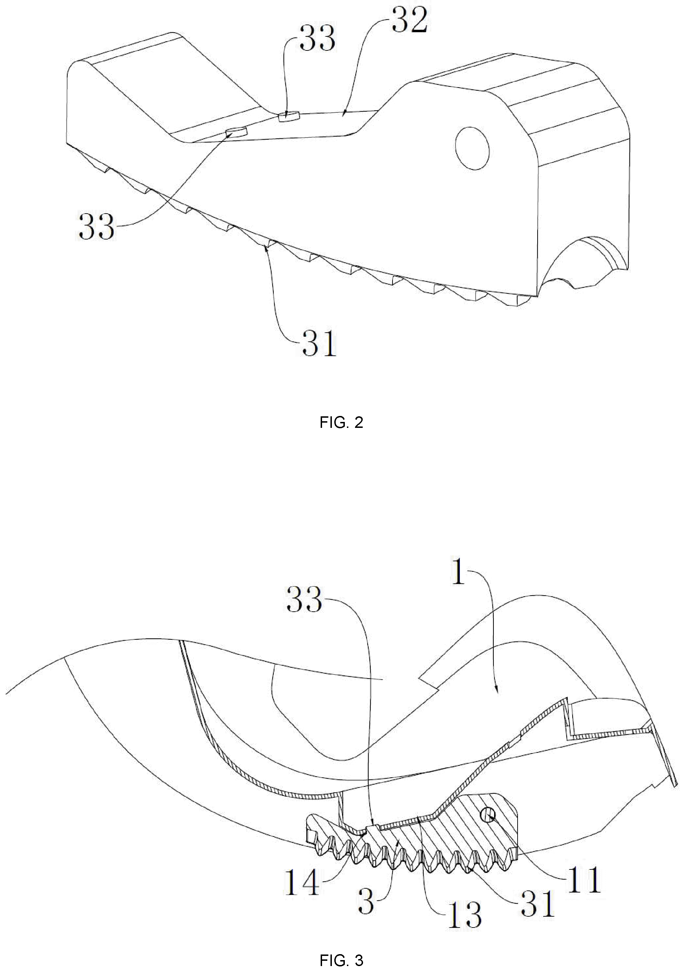

Optionally, as shown in FIGS. 2 and 3, the worm gear 3 is provided with a recessed part 32, and the bottom portion of the seat body 1 is formed with a protruding part 13 that cooperates with the recessed part 32.

The recessed part 32 and the protruding part 13 are fixed in position relative to each other. When the worm gear 3 moves, the seat body 1 can be driven to move synchronously through the engagement between the recessed part 32 and the protruding part 13, ensuring a good cooperation and connection between the worm gear 3 and the bottom portion of the seat body 1, thereby realizing the adjustment of the angle of the seat body 1. The combination of the recessed part 32 and the protruding part 13 can provide better stability, allowing the seat body 1 to move smoothly during the adjustment process, while also increasing the durability of the structure. The section of the protruding part 13 is trapezoidal-shaped, and the sectional shape of the recessed part 32 matches that of the protruding part 13, further enhancing the structural strength.

Optionally, as shown in FIGS. 2 and 3, the recessed part 32 is provided with bosses 33, and the protruding part 13 is provided with mounting holes 14 cooperating with the bosses 33.

The cooperation between the bosses 33 and the mounting holed 14 ensures a more secure and stable connection between the worm gear 3 and the bottom portion of the seat body 1, which helps to further optimize the performance and stability of the adjustment of the tilt angle of the seat body 1. In this embodiment, two bosses 33 are provided and spaced apart. The mounting holes 14 is arranged in a one-to-one correspondence with the bosses 33, thereby ensuring a more secure and reliable connection between the worm gear 3 and the seat body 1.

Another embodiment of the present disclosure provides a child safety seat, including the stepless angle-adjustment structure for a seat body as described above.

**In** this embodiment, the child safety seat employs the worm gear 3 connected to the seat body 1 via the first connecting rod 11 and the worm 4 movably mounted on the base assembly 2. Through the transmission connection between the worm gear 3 and the worm 4, the tilt angle of the child safety seat body 1 can be smoothly adjusted, which can reduce manufacturing costs and improve production efficiency, while meeting the needs of different children and making the seat suitable for various usage scenarios. In addition, by utilizing the self-locking between the worm gear 3 and the worm 4, the tilt angle of the seat body 1 can be set at any position within its travel range, thereby achieving stepless adjustment of the tilt angle of the seat body 1.

Although the disclosure is described above, the scope of protection of this disclosure is not limited thereto. Those skilled in the art can make various changes and modifications without departing from the spirit and scope of this disclosure, and all such changes and modifications shall fall within the scope of protection of the present disclosure.

## Claims

1. A stepless angle-adjustment structure for a seat body, comprising a seat body (1) and a base assembly (2), wherein the seat body (1) is provided with a first connecting rod (11), the base assembly (2) includes a support frame (21), the support frame (21) is provided with a first arc-shaped guide rail (211) slidably connected to the first connecting rod (11); the first connecting rod (11) is connected to a worm gear (3), and the base assembly (2) is movably connected to a worm (4) meshing with the worm gear (3).

2. The stepless angle-adjustment structure for a seat body according to claim 1, wherein the worm gear (3) is connected to a middle portion of the first connecting rod (11).

3. The stepless angle-adjustment structure for a seat body according to claim 1, wherein the base assembly (2) includes a base (22) and a rotary disc (23) rotatably connected to each other, the support frame (21) is fixedly disposed on the rotary disc (23), and the worm (4) is movably connected to the rotary disc (23).

4. The stepless angle-adjustment structure for a seat body according to claim 3, wherein the rotary disc (23) is provided with support holes (231) for rotatably mounting the worm (4).

5. The stepless angle-adjustment structure for a seat body according to claim 1, wherein the seat body (1) is further provided with a second connecting rod (12) spaced apart from the first connecting rod (11) in a front-rear direction, and the support frame (21) is provided with a second arc-shaped guide rail (212) slidably connected to the second connecting rod (12).

6. The stepless angle-adjustment structure for a seat body according to claim 5, wherein the first connecting rod (11) is located in front of the second connecting rod (12).

7. The stepless angle-adjustment structure for a seat body according to claim 1, wherein the worm gear (3) is provided with helical teeth (31), and the helical teeth (31) are concentrically arranged with the first arc-shaped guide rail (211).

8. The stepless angle-adjustment structure for a seat body according to claim 1, wherein the worm gear (3) is provided with a recessed part (32), and a bottom portion of the seat body (1) is formed with a protruding part (13) that cooperates with the recessed part (32).

9. The stepless angle-adjustment structure for a seat body according to claim 8, wherein the recessed part (32) is provided with a boss (33), and the protruding part (13) is provided with a mounting hole (14) that cooperates with the boss (33).

10. A child safety seat, comprising the stepless angle-adjustment structure for a seat body according to any one of claims 1 to 9.
